**Europäisches Patentamt**

(19) **European Patent Office**

**Office européen des brevets**

(11) Publication number : **0 465 244 A2**

# EUROPEAN PATENT APPLICATION

(12)

(21) Application number : **91306071.1**

(22) Date of filing : **04.07.91**

(51) Int. Cl.⁵ : **G10H 1/00**

(30) Priority : **06.07.90 JP 179792/90**

(43) Date of publication of application :
**08.01.92 Bulletin 92/02**

(84) Designated Contracting States :
**DE FR GB**

(71) Applicant : **PIONEER ELECTRONIC CORPORATION**
**No. 4-1, Meguro 1-chome**
**Meguro-ku Tokyo-to (JP)**

(72) Inventor : **Yamauchi, Keiichi, c/o Pioneer Electronic Corp.**
**Kawagoe Works, No, 25-1 Aza-Nishicho**
**Oaza-Yamada, Kawagoe-shi, Saitama-ken (JP)**
Inventor : **Shimizu, Toshihiko, c/o Pioneer Electronic Corp.**
**Kawagoe Works, No, 25-1 Aza-Nishicho**
**Oaza-Yamada, Kawagoe-shi, Saitama-ken (JP)**
Inventor : **Sudo, Satomi, c/o Pioneer Electronic Corp.**
**Kawagoe Works, No, 25-1 Aza-Nishicho**
**Oaza-Yamada, Kawagoe-shi, Saitama-ken (JP)**

(74) Representative : **Brunner, Michael John et al**
**GILL JENNINGS & EVERY 53-64 Chancery Lane**
**London WC2A 1HN (GB)**

(54) **Apparatus for reproducing information.**

(57)    A CD-ROMXA disk stores digital audio information including a plurality of music piece information, and a digital contents information table including word-of-song information which represents the words of the music piece information with character code information. The CD-ROMXA disk is typically loaded in a musical accompaniment playback apparatus, or "karaoke" playback apparatus. When the disk is played back, the recorded digital audio information is reproduced to play back a desired musical accompaniment. At the same time, a printer or a liquid crystal display unit displays, as characters, a word-of-song information of the reproduced digital audio information.

EP 0 465 244 A2

FIG. 1 (D)

501: INFORMATION REPRODUCING
APPARATUS

101

INFORMATION
STORAGE
MEDIUM

601

INFORMATION
READING
UNIT

RF: AUDIO
INFORMATION
SIGNAL

WORD-OF-SONG
INFORMATION
OUTPUT UNIT

901

$O_w$

$O_w$: WORD-OF-SONG INFORMATION
SIGNAL

The present invention relates to an apparatus for reproducing information, and more particularly to an apparatus for reproducing digital audio information, especially for playing back pre-recorded musical accompaniments, so-called "karaoke".

A conventional apparatus for playing back pre-recorded musical accompaniments, or a musical accompaniment playback apparatus, reproduces such pre-recorded musical accompaniments by playing back information recording mediums, such as magnetic tapes video disks, etc., on which only musical accompaniments are recorded. Such a musical accompaniment playback apparatus includes an amplifier connected to a microphone and a loudspeaker, and mixes vocal signals supplied from the microphone with signals of reproduced musical accompaniments, amplifies the mixed signals, and supplies the amplified signals to the loudspeaker to produce audible sounds.

When a user of the musical accompaniment playback apparatus sings a desired song, the user sings the song to the reproduced musical accompaniment of the song while visually confirming the text or words of the song with a printed song book or the like.

However, it often happens that no song book is available to the user or, a number of people wish to sing a song together and there are not enough song books to go around. It would be convenient if the words of a desired song could be presented to the user even without a printed song book or the like.

Recently, compact disks (CDs), which are one type of digital audio disks, are used as a recording medium for karaoke music or musical accompaniments. On a CD, pulse-code-modulated musical information is recorded in time-divided storage areas. One storage area, known as "TOC" (Table of Contents) and serving as a table of subcodes for retrieving recorded music pieces, is located on the innermost lead-in track of the CD. The TOC storage area has a storage capacity of 9 bytes, and can store information including code information indicative of codes converted from the titles of the recorded music pieces, and addresses of the recorded music pieces. However, the storage capacity of the TOC storage area is not large enough to store any information that would represent the words of the recorded music pieces.

It is an object of the present invention to provide an apparatus for reproducing recorded information including contents, such as words or texts, of songs recorded on an information storage medium, so that the reproduced information is readily available to the user of the apparatus for confirming the contents.

According to one aspect of the present invention, there is provided an apparatus for reproducing information from an information storage medium which stores digital audio information including a plurality of music piece information, and a digital contents information table including word-of-song information which represents the words of the music piece information with character code information, the apparatus comprising information reading means for reading infromation from the information storage medium, and word-of-song information output means for outputting, in the form of characters, a word-of-song information signal which is indicative of the word-of-song information of the information read by the information reading means. The information storage medium may include an optical storage disk according to Adaptive Differential Pulse Code Modulation system. The apparatus may further comprise an accoustoelectric transducer for transducing voice sound sung in relation to the music piece information into electric voice information, and information mixing means for mixing the music piece information with the electric voice information. The information storage medium may include an optical storage disk according to Adaptive Differential Pulse Code Modulation system. The word-of-song information output means may include a cathode ray tube for displaying the word-of-song information signal in the form of the characters, a liquid crystal display unit for displaying the word-of-song information signal in the form of the characters and a printer for printing the word-of-song information signal in the form of the characters. The word-of-song information output means may be unified with the accoustoelectric transducer.

The above and other object, features and advantages of the present invention will become more apparent from the following description when taken in conjunction with the accompanying drawings in which a preferred embodiment of the present invention is shown by way of illustrative example.

FIGS. 1(A) through 1(D) are diagrams illustrating a first embodiment of the present invention, respectively.

FIG. 2 is a diagram showing a data structure of a CD-ROMXA disk which is used as an information storage medium in a second embodiment of the present invention.

FIG. 3 is a block diagram illustrative of an ADPCM system.

FIG. 4 is a diagram showing a table of ADPCM sound quality levels and audio characteristics.

FIGS. 5(A) through 5(C) are diagrams showing a date structure of a file information table (FILE-TOC), respectively.

FIG. 6 is a block diagram of a karaoke or musical accompaniment playback apparatus as an apparatus for reproducing information according to a second embodiment of the present invention.

FIGS. 7(A) through 7(D) are a flowchart of a control program for controlling operation of the musical accompaniment playback apparatus shown in FIG. 6, respectively.

FIGS. 8(A), through 8(C) are views showing the musical accompaniment playback apparatus according to another embodiment of the present invention as it is amounted in an automobile, respectively

## First Embodiment

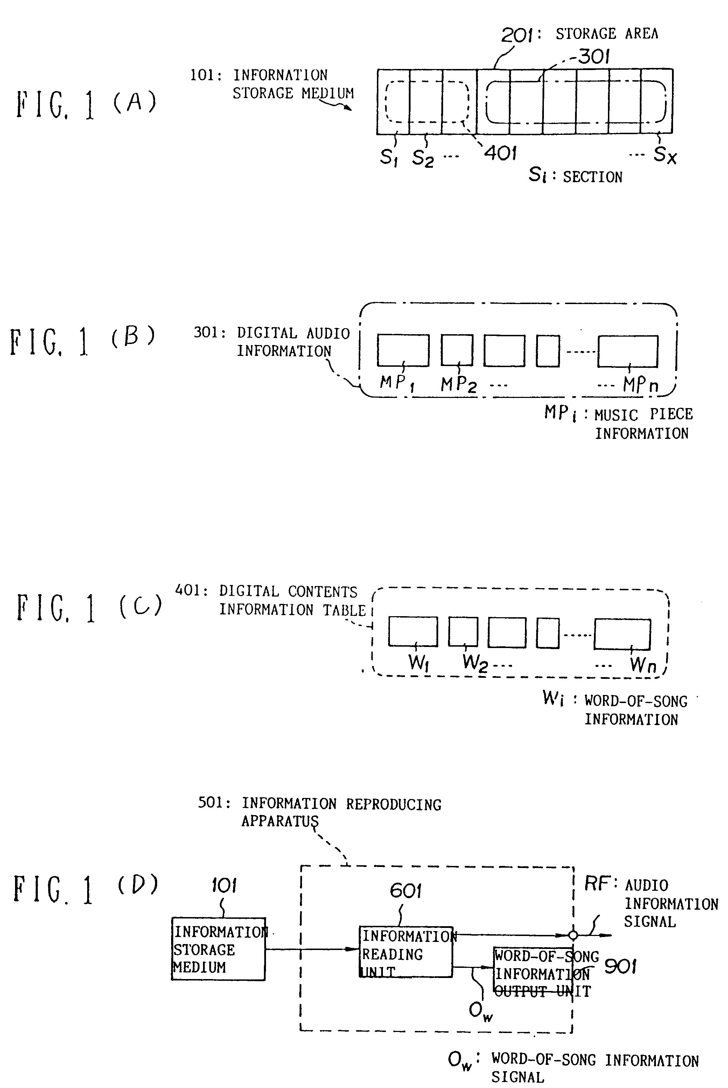

FIGS. 1(A) through 1(D) schematically show a first embodiment of the present invention.

FIG. 1 (A) shows an information storage medium 101 for use in the present invention, the information storage medium 101 having a storage area 201. The storage area 201 stores digital audio information 301 and a digital contents information table 401. The digital audio information 301 contains a plurality of music piece information $MP_1$ - $MP_n$, as shown in FIG. 1(B). As shown in FIG. 1(C), the digital contents information table 401 contains a plurality of word-of-song information $W_1$ - $W_n$ which represent the texts or words of the music piece information $MP_1$ - $MP_n$ with character code information. As shown in FIG. 1(D), the information recorded in the information storage medium 101 can be reproduced by an information reproducing apparatus 501 which comprises an information reading unit 601 for reading information and a word-of-song information output unit 901 for outputting word or text information.

In operation, the information storage medium 101 is played back by the information reproducing apparatus 501 to reproduce information stored in the storage area 201. When the digital contents information table 401 is played back by the information reproducing apparatus 501, the information reproducing apparatus 501 reproduces the word-of-song information $W_1$ - $W_n$ which represents the texts or words of songs in the digital audio information 301 with character code information. As described above, the digital audio information 301 contains the plural music piece information $MP_1$ - $MP_n$, and the plural word-of-song information, $W_1$ - $W_n$ represent the texts or words of the music piece information $MP_1$ - $MP_n$ with character code information. The user can control the word-of-song information output unit 901 to display character information which is indicative of a word-of-song information signal $O_W$ corresponding to the word-of-song information $W_1$ - $W_n$ among the information read from the information storage medium 101 by the information reading unit 601. Therefore, even without a printed song book for the songs, the user can have the information reproducing apparatus 501 display the words of the songs in the form of the characters, and sings a desired one of the stored songs according to the displayed words.

## Second Embodiment

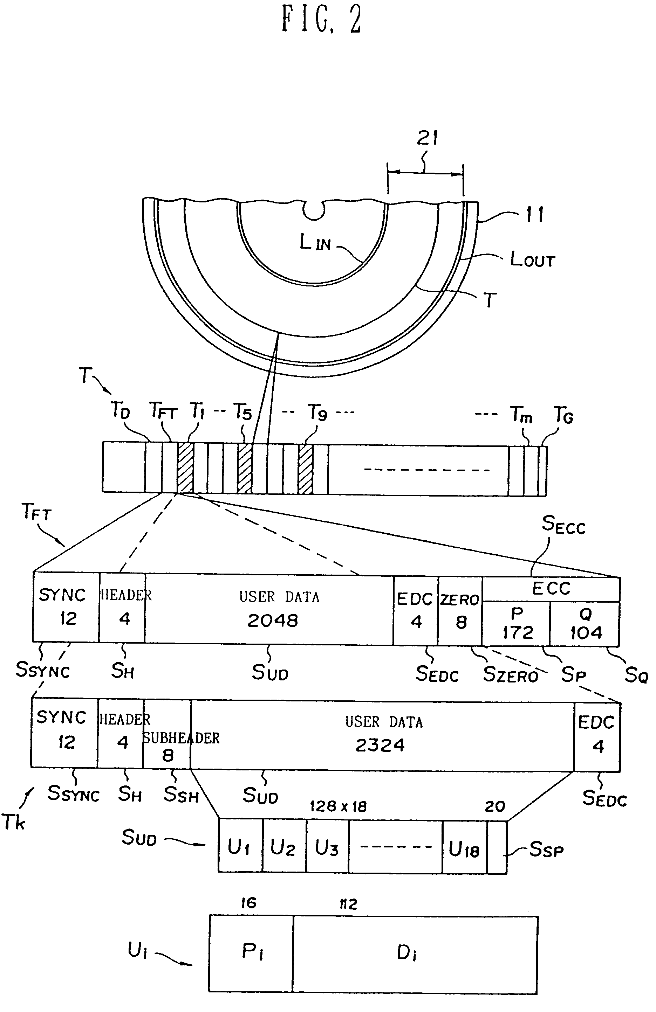

FIG. 2 shows a data structure of an information storage medium used in a second embodiment of the present invention, the information storage medium being in the form of a CD-ROMXA disk.

A CD-ROM is an information storage medium that employs a compact disk (CD), which has been widely used as a digital audio disk, as a ROM (read-only memory) for only reading stored digital information. Standards for CD-ROMs were established in 1985. CD-ROMs are finding widespread use in various applications, and are advantageous in that they provide a very large storage capacity, are highly reliable as they operate optically, can access desired information quickly, are available in a large number of duplicates, and can establish an inexpensive reproduction system.

Information storage mediums which employ a format based on the CD-ROM include a CD-I (CD-Interactive) and a CD-ROMXA. Both can record and reproduce voice sound/audio information and image information, which are modulated according to ADPCM (Adaptive Differential Pulse Code Modulation) (see Nikkei Electronics, May 15, 1989, pages 195-200).

The data/sector structure of a storage area in a CD-ROMXA is illustrated in FIG. 2.

According to the CD signal format, 98 frames of subcodes are handled as one block, and one block corresponds to 1/75 second. Since

$$44.1 \times 10^3 \times 16 \times 2 \times 1/75 \times 1/8 = 2352,$$

data represented by 2352 bytes can be recorded in one block on a CD. In the above equation, $44.1 \times 10^3$ indicates a sampling frequency, 16 a quantizing number, 2 left and right channels (L and R) of a stereophonic system, 1/75 time (second), and 1/8 a conversion rate between bits and bytes.

On the CD-ROMXA disk, each block is referred to as a sector, user data are recorded in each sector. There are two standards, Mode 1 and Mode 2 for CD-ROMXA disks depending on the size of the user data area, etc., and there are two standards, Form 1 and Form 2 for Mode 2.

As shown in FIG. 2, the CD-ROMXA disk, designated by 11, has lead-in tracks $L_{IN}$, a storage area 21, and lead-out tracks $L_{OUT}$. In the storage area 21, each track T has a volume descriptor $T_D$, sectors $T_1$ - $T_m$, and a gap $T_G$. The volume descriptor $T_D$ is an area for storing an identification code indicating the CD-ROMXA disk, a flag, a start-up directory, etc., and is recorded in Mode 1 or Mode 2 Form 1. The sectors $T_1$ - $T_m$ (e.g., $T_k$) store image and voice sound or audio signals, and are recorded in Mode 2 Form 2, and each contains a syncronizing signal $S_{SYNC}$, a header $S_H$, a subheader $S_{SH}$, user data $S_{UD}$, and an error detecting code $S_{EDC}$. The synchronizing signal $S_{SYNC}$ is composed of 12 bytes, and serves to distinguish the sectors. The header $S_H$ is composed of 4 bytes, three for storing address information similar to the subcodes for CDs, and one for storing mode information. The subheader $S_{SH}$ is composed of 8 bytes, and includes a final number $H_1$, a channel number $H_2$, a submode H3, and a coding formation $H_4$. Each of these items

$H_1$ - $H_4$ is composed of 1 byte, and is written twice (i.e., repeated twice).

The user data $S_{UD}$ is composed of 2324 bytes and has data units $U_1$ - $U_n$ and a spare unit $U_{SP}$. In FIG. 2, each of the data units $U_1$ - $U_n$ is composed of 128 bytes, and the spare unit $U_{SP}$ is composed of 20 bytes. Therefore, the number of data units "n" is 18 in the illustrated embodiment. The data units $U_1$-$U_n$ are composed of a total of 2304 bytes. The voice sound and audio signals are encoded by ADPCM and recorded in these data units. The error detecting code $S_{EDC}$ is composed of 4 bytes.

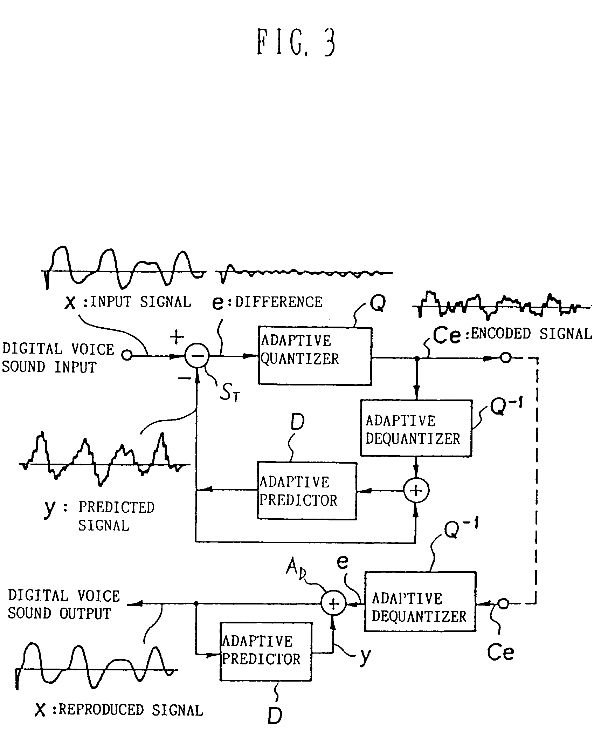

FIG. 3 shows the principles of an ADPCM system. A modulation is carried out as follows. A present input signal is predicted from a past input signal by an adaptive predictor D, and the difference e (= x - y) between the predicted signal y and a present input signal x is calculated by a subtractor $S_T$. Then, the difference e is quantized with a plurality of bits and encoded into a coded signal $C_e$ by an adaptive quantizer Q. A demodulation process is carried out in a manner which is the reversal of the above mentioned process. More specifically, the coded signal $C_e$ is decoded back to the difference e by an adaptive dequantizer $Q^{-1}$. Then, the predicted signal y from the adaptive predictor D and the difference e are added into an output signal x by an adder $A_D$.

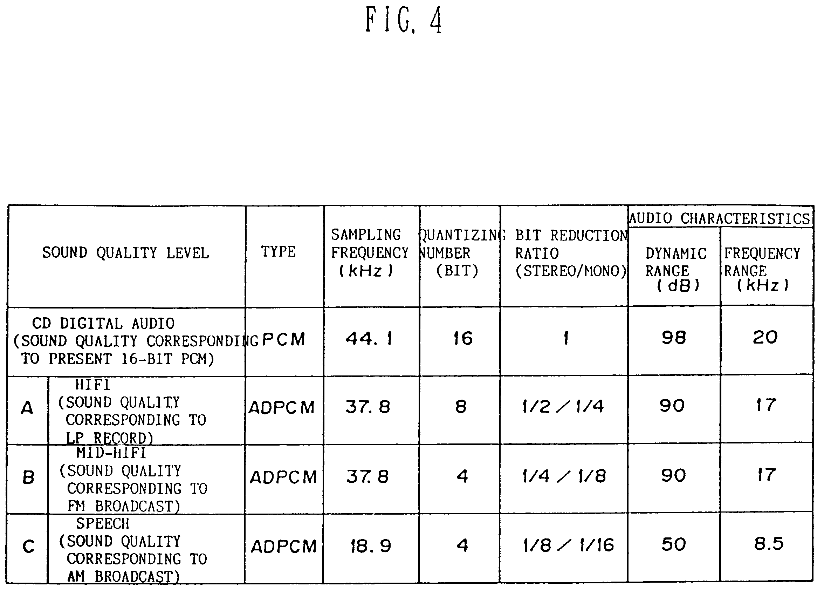

The ADPCM system allows audio data to be recorded efficiently with a smaller number of bits. Audio characteristics vary depending on the bit reduction ratio (data compression ratio). FIG. 4 shows the relationship between ADPCM sound quality levels and audio characteristics. It can be seen from FIG. 4 that the bit reduction ratio in the sound quality level A is 1/2 for stereophonic reproduction and 1/4 for monaural reproduction, the bit reduction ratio in the sound quality level B is 1/4 for stereophonic reproduction and 1/8 for monaural reproduction, and the bit reduction ratio in the sound quality level C is 1/8 for stereophonic reproduction and 1/16 for monaural reproduction. If the bit reduction ratio is 1/4, then, the required storage capacity may be 1/4 of the conventional storage capacity, and the remaining 3/4 storage capacity may be used to store other data.

In FIG. 2, each data unit $U_i$ is composed of 128 bytes, and has a sound parameter area $P_i$ and an ADPCM sample data area $D_i$. The sound parameter area $P_i$ has a storage capacity of 16 bytes, and stores a coefficient of a predictive filter in the adaptive predictor D shown in FIG. 3. The ADPCM sample data area $D_i$ has a storage capacity of 112 bytes and stores data sampled by the ADPCM system. Therefore, one sector has an overall data storage capacity of 2016 bytes (=112 × 18). If data are to be stored in the ADPCM sound quality level B for stereophonic reproduction, then 504 bytes will be required to store the data because

$$37.8 \times 10^3 \times 4 \times 2 \times 1/75 \times 1/8 = 504.$$

Therefore, since 2016 ÷ 504 = 4, data which are four times greater than the data possible with the conventional storage system can be stored. Stated otherwise, voice sound and audio signals for four channels can be stored. The first channel is stored the sectors $T_1$, $T_5$, $T_9$, ..., $T_{4h+1}$ (h is an integer of 0 or more). The second channel is stored in sectors $T_2$, $T_6$, $T_{10}$, ···, $T_{4h+2}$. The third channel is stored in sectors $T_3$, $T_7$, $T_{11}$,···, $T_{4h+3}$. The fourth channel is stored in sectors $T_4$, $T_8$, $T_{12}$, ···, $T_{4h+4}$.

In this manner, musical accompaniments of karaoke music pieces, which correspond to the music piece information, are pulse-code-modulated and stored in the ADPCM sample data area $D_i$.

A file information table (hereinafter referred to as a "FILE-TOC"), which correspond to the digital contents information table, can be stored in the user data area $S_{UD}$. The FILE-TOC is stored in a sector $T_{FT}$ which, as shown in FIG. 2, comprises one or more sectors following the volume descriptor $T_D$. The FILE-TOC may be stored in Mode 1 or Mode 2 Form 1, but is stored in Mode in the illustrated embodiment. More specifically, if one sector is used, then the available storage capacity for storing the FILE-TOC is 2048 bytes as shown in FIG. 2. If N sectors are used, then the available storage capacity is 2048 × N bytes. In Mode 1, the sector $T_{FT}$ has no subheader, and instead has a ZERO area $S_{ZERO}$ and an error correcting code area $S_{ECC}$. The ZERO area $S_{ZERO}$ is composed of 8 bytes and reserved. The error correcting code area $S_{ECC}$ is composed of 276 bytes, and has a parity P area $S_P$ (172 bytes) and a parity Q area $S_Q$ (104 bytes).

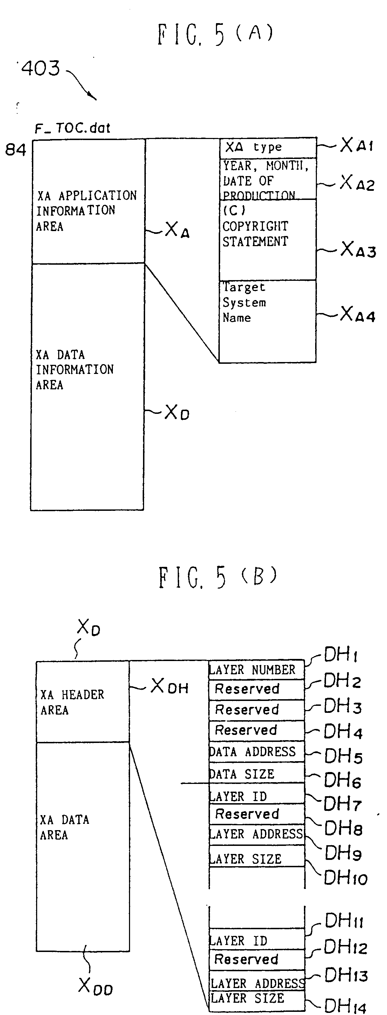

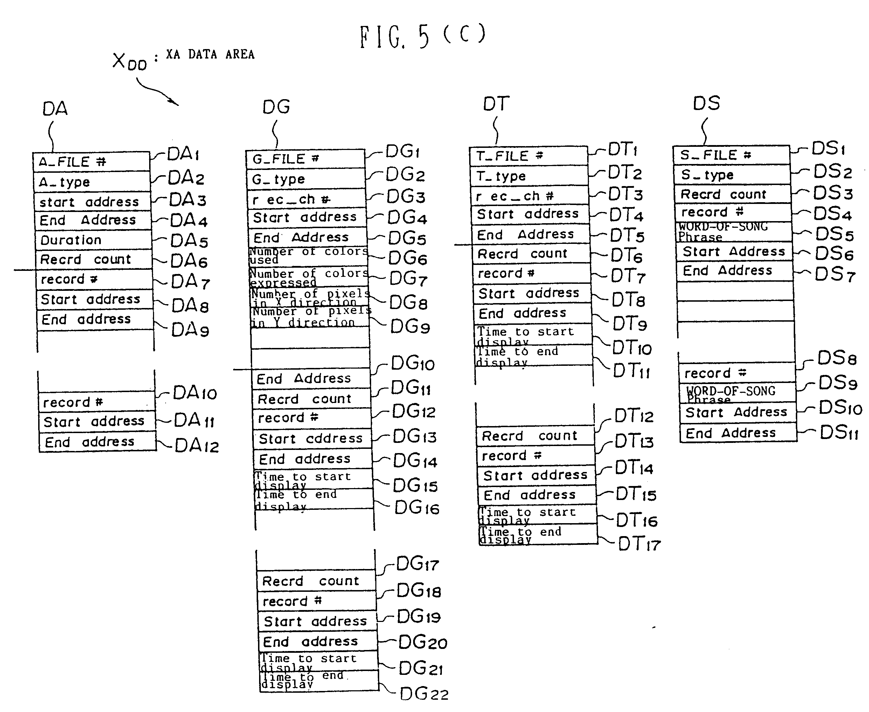

FIGS. 5(A), 5(B), and 5(C) show an example of a FILE-TOC, generally designated by 403. The FILE-TOC 403 is stored in one sector, and has an XA application information area $X_A$ and an XA data information area $X_D$. The XA application information area $X_A$ is composed of 84 bytes and serves to store information regarding the contents of the disk. The XA application information area $X_A$ includes a part $X_{A1}$, a part $X_{A2}$, a part $X_{A3}$, and a part $X_{A4}$. The part $X_{A1}$ is composed of 4 bytes, and stores the type of the CD-ROMXA disk, e.g., a type for storing only musical accompaniments of karaoke, a type for storing musical accompaniments and image information, etc. The part $X_{A2}$ is composed of 16 bytes, and stores the year, month, and date when the CD-POMXA disk is produced. The part $X_{A3}$ is composed of 32 bytes, and stores information concerning the copyright of the CD-ROMXA disk. The part $X_{A4}$ is composed of 32 bytes, and stores information about the corresponding target system. The XA data information area $X_D$ is composed of 2240 bytes and has an XA header area $X_{DH}$ and an XA data area $X_{DD}$. The XA header area $X_{DH}$ serves to store information about the XA data area, specifically, a layer number $DH_1$, a data address $DH_5$, a data size $DH_6$, a layer ID $DH_7$, a layer address $DH_9$, a layer size

$DH_{10}$, and other information. The XA data area $X_{DD}$ serves to store various information data, i.e., the digital contents information. More specifically, the XA data area $X_{DD}$ has an audio data area DA, a graphic data area DG, a telop (superimposed character) data area DT, a word data area DS. If musical accompaniments are stored as music piece information, then the digital contents information is stored mainly in the audio data area DA. Word phrases or word-of-song information is stored in the word data area DS. If music title data are character code information such as JIS code data, then they are usually stored in units of 8 bits (1 byte). If music title data are voice sound data representing music titles with voice sounds, then they are compressed and stored according to an ADPCM system (e.g., recorded in the level C for monaural reproduction).

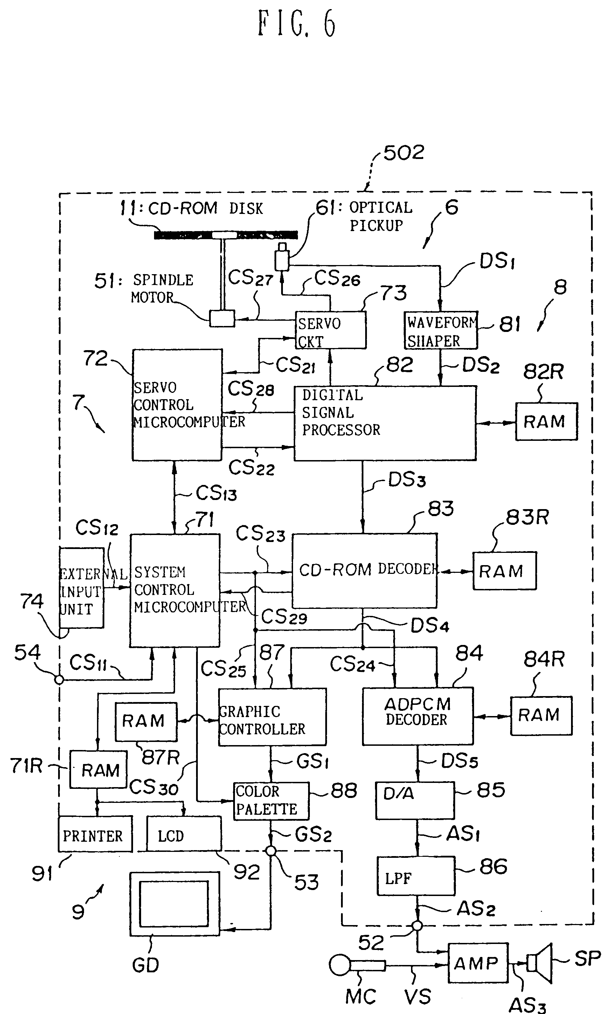

FIG. 6 shows in block form an apparatus for reproducing information as a second embodiment of the present invention. The information reproducing apparatus shown in FIG. 6 is incorporated in a karaoke or musical accompaniment playback apparatus 502.

As shown in FIG. 6, the musical accompaniment playback apparatus 502 comprises an optical pickup 61 as a means for reading information, a control block 7 as a control means, a spindle motor 51, a demodulator block 8, a contents information output block 9, and external terminals 52, 53, 54.

The control block 7 comprises a system control microcomputer 71, a RAM (Random Access Memory) 71R, a servo control microcomputer 72, a servo circuit 73, and an external input unit 74.

The demodulator block 8 has a waveform shaper 81, a digital signal processor 82, a RAM 82R, a CD-ROM decoder 83, a RAM 83R, an ADPCM decoder 84, a RAM 84R, a D/A converter 85, a low-pass filter 86, a graphic controller 87, a RAM 87R, and a color palette 88.

The contents information output block 9 has a printer 91 and a liquid crystal unit 92.

An external amplifier AMP may be connected to the external terminal 52, and an external microphone MC and an external loudspeaker SP may be connected to the external amplifier AMP.

A graphic display unit GD may be connected to the external amplifier 53. An external control unit such as a microcomputer may be coupled to the external terminal 54.

The musical accompaniment playback apparatus 502 operates as follows:

A CD-ROM disk 11 is rotated about its own axis by the spindle motor 51. The optical pickup 61 reads a digital signal represented by a sequence of pits from the recording surface of the CD-ROM disk 11. The digital signal, designated by $DS_1$, read by the optical pickup 61 is supplied to the waveform shaper 81 by which the waveform of the digital signal is shaped.

The shaped digital signal is then applied as a digital signal $DS_2$ to the digital signal processor 82. In the digital signal processor 82, the edges of an EFM signal are detected, using a reference clock signal generated by a quartz crystal oscillator, thereby reproducing a sequence of data. From the reproduced sequence of data, there is detected a frame synchronizing signal, based on which the structure of frame data is exactly reproduced. The frame data are converted into 8-bit symbol data by EFM demodulation, and written into the RAM 82R. The data stored in the RAM 82R is then deinterleaved. Thereafter, an error correcting process is effected on the data. The corrected data are then sent as a signal $DS_3$ from the digital signal processor 82 to the CD-ROM decoder 83. In the CD-ROM decoder 83, addresses are sought according to the absolute time of the subcode, synchronizing signals in the data are detected, and the data are unscrambled. Then, the header address is checked, and a desired sector is accessed. The user data which are obtained are subjected to error detection and correction processes, after which the corrected data are supplied as a signal $DS_4$ to the ADPCM decoder 84.

The ADPCM decoder 84 has an adaptive dequantizer and an adaptive predictor (not shown), and demodulates the signal $DS_4$ into a digital signal and supplies the demodulated signal as a signal $DS_5$ to the D/A converter 85.

The D/A converter 85 converts the demodulated signal $DS_5$ into an analog signal, and sends the analog signal as a signal $AS_1$ to the low-pass filter 86. The low-pass filter 86 processes the signal $AS_1$ into an accurate signal $AS_2$ and applies the signal $AS_2$ to the external terminal 52.

The analog signal $AS_2$, which is an audio output signal from the musical accompaniment playback apparatus 502, is applied to the external amplifier AMP. Voice sounds applied to the external microphone MC are converted thereby into a microphone voice signal VS. The external amplifier AMP adjusts the frequency characteristics of the analog signal $AS_2$ and also mixes the analog signal $AS_2$ with the microphone voice signal VS. Then, the external amplifier AMP amplifies the mixed signal to a suitable level, and then sends the amplified signal as a signal $AS_3$ to the external loudspeaker SP. The external loudspeaker SP converts the signal $AS_3$ into audible sounds which are radiated from the external loudspeaker SP.

The signal $DS_4$, outputted from the CD-ROM decoder 83, is also transmitted to the graphic controller 87. In cases where image information is stored in the user data $S_{UD}$ of the CD-ROM disk 11, the graphic controller 87 extracts an image signal representing the image information contained in the signal $DS_4$, and outputs the extracted image signal as a graphic signal $GS_1$. For example, the graphic controller 87 produces such a graphic signal if word-of-song infor-

mation $W_1$- $W_n$ are stored as character code information in the FILE-TOC 403 of the CD-ROM disk 11. The graphic signal $GS_1$ is then supplied to the color palette 88. The color palette 88 adjusts or adds the color represented by the graphic signal $GS_1$, and outputs it as a graphic signal $GS_2$ to the external terminal 53. The graphic signal $GS_2$, which is an image output signal from the musical accompaniment playback apparatus 502, is applied to the graphic display unit GD. The graphic display unit GD displays an image represented by the graphic signal $GS_2$.

The system control microcomputer 71 applies a control signal $CS_{13}$ to the servo control microcomputer 72 according to control signal $CS_{12}$ supplied from the external input unit 74, a control signal $CS_{11}$ supplied from the external terminal 54, or a control program stored in the system control microcomputer 71. The system control microcomputer 71 also controls the CD-ROM decoder 83, the ADPCM decoder 84, the graphic controller 87, and the color palette 88 with respective control signals $CS_{23}$, $CS_{24}$, $CS_{25}$, $CS_{30}$. The system control microcomputer 71 receives FILE-TOC data as a control signal $CS_{29}$ from the CD-ROM decoder 83, and stores the data in the RAM 71R. The servo control microcomputer 72 receives the control signal $CS_{13}$ from the system control microcomputer 71, and also receives a subcode signal $CS_{28}$ from the digital signal processor 82. The servo control microcomputer 72 controls the digital signal processor 82 and the servo circuit 73 with respective control signals $CS_{22}$, $CS_{21}$. The servo circuit 73 is responsive to the control signal $CS_{21}$ from the servo control microcomputer 72 to control the optical pickup 61 and the spindle motor 51 with respective control signals $CS_{26}$, $CS_{27}$.

Operation of the musical accompaniment playback apparatus 502 which is loaded with the CD-ROM disk 11 will now be described below with reference to FIGS. 5(A) through 5(C), 6 and 7(A) through 7(D).

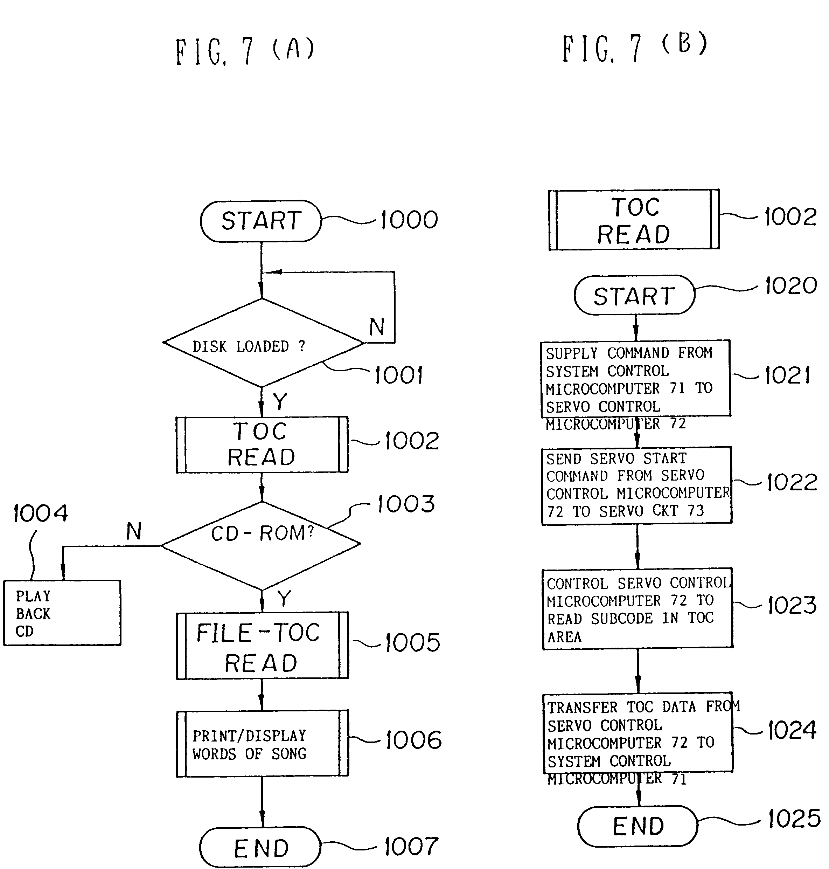

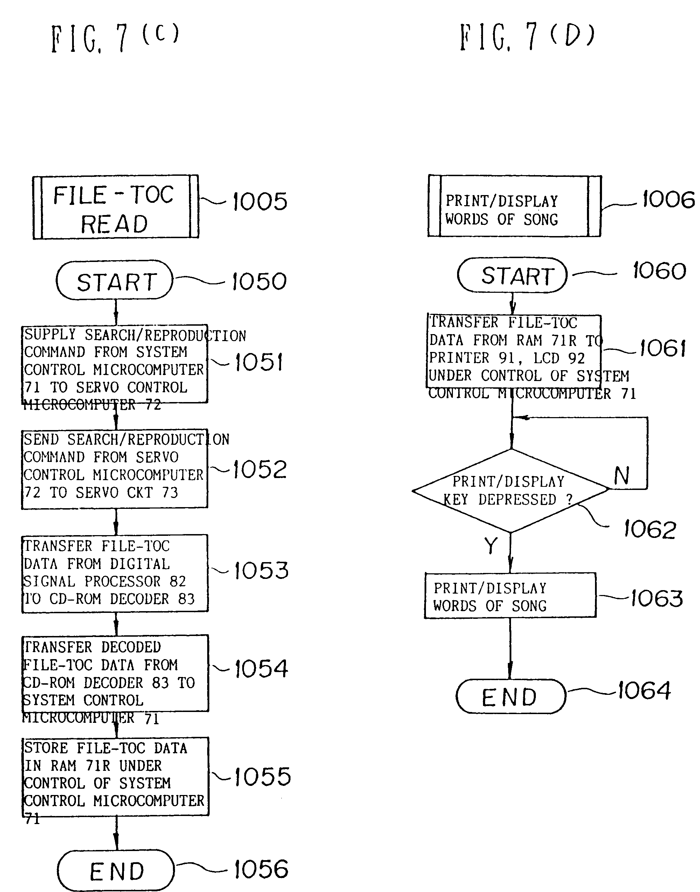

As shown in FIG. 7(A), the musical accompaniment playback apparatus 502 starts to operate at a step 1000, and then determines whether a disk is loaded or not in a step 1001. If a disk is loaded, then control goes from the step 1001 to a step 1002 which is a subroutine for reading a TOC stored in the lead-in tracks of the loaded disk. After the step 1002, the step 1003 determines whether the loaded disk is an ordinary CD or a CD-ROM. If the loaded disk is an ordinary CD, then control goes to a step 1004 in which the CD is played back. If the loaded disk is a CD-ROM, then control proceeds to a step 1005 which is a subroutine for reading the FILE-TOC data from the FILE-TOC of the disk. After the step 1005, control goes to a step 1006 which is a subroutine for printing or displaying the words or text of a desired song of the disk. The sequence shown in FIG. 7(A) ends at a step 1007.

The subroutine in the step 1002 for reading the TOC is started in a step 1020 in FIG. 7(B). In a step 1021, a command signal is applied to the servo control microcomputer 72 from the system control microcomputer 71 to supply a servo operation start command from the servo control microcomputer 72 to the servo circuit 73 in a step 1022, thus controlling the optical pickup 61 for tracking under servo control. Then, the servo control microcomputer 72 reads subcodes in the TOC area on the lead-in tracks of the CD-ROM disk 11 in a step 1023. The TOC data are transferred from the servo control microcomputer 72 to the system control microcomputer 71 in a step 1024. The subroutine in the step 1005 for reading the FILE-TOC data is started in a step 1050 in FIG. 7(C). A search/reproduction command is applied to the servo control microcomputer 72 from the system control microcomputer 71 in a step 1051. Then, the servo control microcomputer 72 applies a search/ reproduction command to the servo circuit 73 in a step 1052. The digital signal processor 82 transfers the FILE-TOC data to the CD-ROM decoder 83 in a step 1053. The CD-ROM decoder 83 decodes the FILE-TOC data, and the decoded FILE-TOC data are transferred from the CD-ROM decoder 83 to the system control microcomputer 71 in a step 1054. The system control microcomputer 71 stores the transferred FILE-TOC data in the RAM 71R in a step 1055. The subroutine shown in FIG. 7(C) is brought to an end in a step 1056.

The subroutine in the step 1006 will be described below with reference to FIG. 7(D). The FILE-TOC data stored in the RAM 71R is read and transferred to the printer 91 or the liquid display unit 92 by the system control microcomputer 71 in a step 1061. Then, a step 1062 determines whether a key for printing the data or a key for displaying the data is depressed or not. If the data printing key or the data displaying key is depressed, then the data is printed in the form of the characters on the printer 91 or displayed as a character image on the liquid crystal display unit 92 in a step 1063. Then, control is finished in a step 1064.

If the printer 91 prints the entire words or text of the desired song, the printout is produced at one time. If the character image is displayed on the liquid crystal display unit 92, the system control microcomputer 71 controls the readout of the data from the RAM 71R such that the character image is displayed in synchronism with the music accompaniment as it progresses, and word or text phrases are displayed immediately before they are to be sung.

Another Embodiment

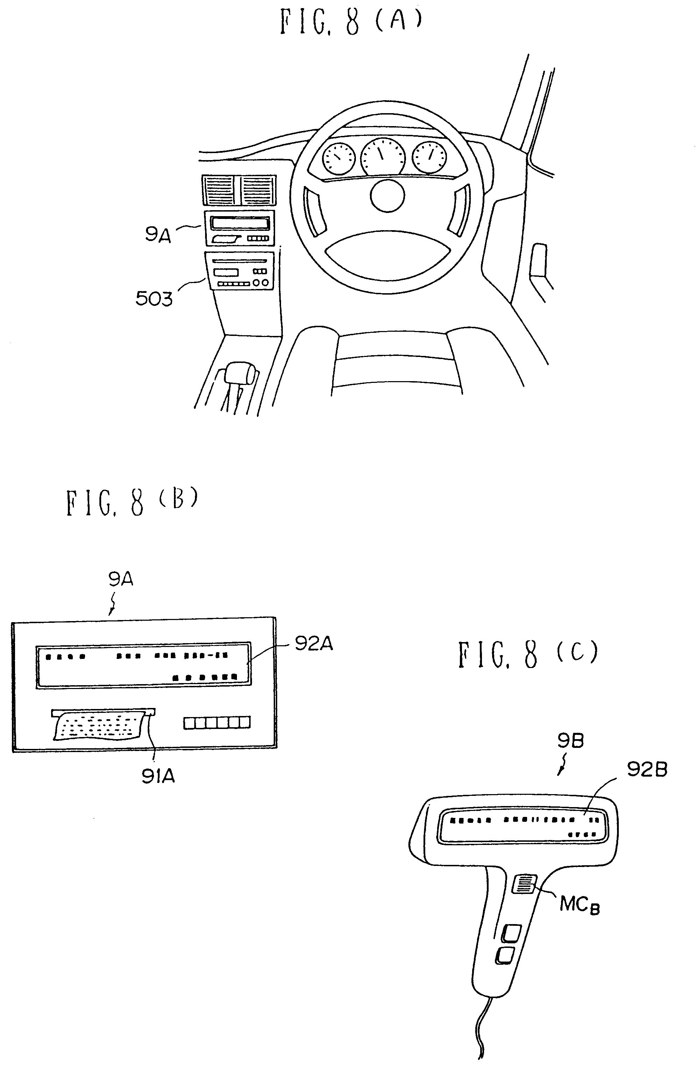

FIGS. 8(A) through 8(C) show the musical accompaniment playback apparatus according to another embodiment of the present invention, as it is incorporated in a passenger car. As shown in FIGS. 8(A) and 8(B), the musical accompaniment playback apparatus, generally designated by 503, has a contents information output unit 9A as a word-of-song information output means has a printer 91A and a liquid crystal display panel 92A. The liquid crystal panel 92A is capable of displaying one or two lines of word phrases at a time. The liquid crystal display panel 92A may also display related information such as a music title, remarks on the words, etc..

As shown in FIG. 8(C), the musical accompaniment playback apparatus 503 may also have a microphone assembly 9B for displaying the words of a song. The microphone assembly 9(B) has a built-in microphone $MC_B$ and a liquid crystal display panel 92B. The liquid crystal display panel 92B can display one or two lines of word phrases at a time, and also display related information such as a music title, remarks on the words, etc.. The user of the musical accompaniment playback apparatus 503 can therefore sing a desired song accurately according to the words or text which may be printed on the printer or displayed on the liquid crystal display panel, even without a printed song book.

In the above embodiment, the music piece information represents musical accompaniments known as karaoke music. However, the music piece information may be a collection of other digital audio information, allowing the user to enjoy listening to songs with vocal sounds while viewing the words or texts thereof.

While the digital contents information in the above embodiment has been described as representing the words or texts of songs for musical accompaniments, the digital contents information may represent music titles, remarks on the words or texts, etc..

The CD-ROMXA disk has been employed as the information storage medium in the above embodiment. However, the information storage medium may be any of various other forms including a CD-ROM, a CD-I, and ordinary CD, a DAT (digital audio tape), an IC card, and a read-only memory of another type.

With the present invention, as described above, the user of the musical accompaniment playback apparatus can know the words or text of a desired song on the image display unit or printer of the musical accompaniment playback apparatus, and can sing the song even without a printed song book or the like. The musical accompaniment playback apparatus is particularly suitable for use in passenger cars.

Since the information storage medium is a digital information storage medium such as a CD-ROMXA, an ordinary CD, or the like, the data stored in the information storage medium can be accessed in a short period of time.

The invention may be embodied in other specific forms without departing from the spirit or essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An apparatus for reproducing information from an information storage medium which stores digital audio information including a plurality of music piece information, and a digital contents information table including word-of-song information which represents the words of the music piece information with character code information, said apparatus comprising:

   information reading means for reading information from the information storage medium; and

   word-of-song information output means for outputting, in the form of the characters, a word-of-song information signal which is indicative of the word-of-song information of said information read by said information reading means.

2. An apparatus according to claim 1, wherein said information storage medium includes an optical storage disk according to Adaptive Differential Pulse Code Modulation system.

3. An apparatus according to claim 1, further comprising:

   accoustoelectric transducer means for transducing voice sound sung in relation to said music piece information into electric voice information; and

   information mixing means for mixing said music piece information with said electric voice information.

4. An apparatus according to claim 3, wherein said information storage medium includes an optical storage disk according to Adaptive Differential Pulse Code Modulation system.

5. An apparatus according to claim 1, wherein said word-of-song information output means includes a cathode ray tube for displaying said word-of-song information signal in the form of the characters.

6. An apparatus according to claim 1, wherein said word-of-song information output means includes a liquid crystal display unit for displaying said word-of-song information signal in the form of the characters.

7. An apparatus according to claim 1, wherein said word-of-song information output means includes a printer for printing said word-of-song information signal in the form of the characters.

8. An apparatus according to claim 3, wherein said word-of-song information output means is unified with said accoustoelectric transducer.

FIG. 1 (A)

101: INFORMATION
STORAGE MEDIUM

201: STORAGE AREA
301
401

$S_1$  $S_2$  ...  $S_X$

$S_i$ : SECTION

FIG. 1 (B)

301: DIGITAL AUDIO
INFORMATION

$MP_1$  $MP_2$  ...  ... $MP_n$

$MP_i$ : MUSIC PIECE
INFORMATION

FIG. 1 (C)

401: DIGITAL CONTENTS
INFORMATION TABLE

$W_1$  $W_2$ ...  ... $W_n$

$W_i$ : WORD-OF-SONG
INFORMATION

501: INFORMATION REPRODUCING
APPARATUS

FIG. 1 (D)

101

INFORMATION
STORAGE
MEDIUM

601

INFORMATION
READING
UNIT

RF : AUDIO
INFORMATION
SIGNAL

WORD-OF-SONG
INFORMATION
OUTPUT UNIT  901

$O_w$

$O_w$ : WORD-OF-SONG INFORMATION
SIGNAL

10

# FIG. 2

| SYNC 12 | HEADER 4 | USER DATA 2048 | EDC 4 | ZERO 8 | ECC | |
|---|---|---|---|---|---|---|
| | | | | | P 172 | Q 104 |

| SYNC 12 | HEADER 4 | SUBHEADER 8 | USER DATA 2324 | EDC 4 |
|---|---|---|---|---|

$S_{UD}$ — | $U_1$ | $U_2$ | $U_3$ | — — — — — | $U_{18}$ | — $S_{SP}$

$128 \times 18$ ... $20$

| $P_i$ | $D_i$ |
|---|---|

$16$ ... $112$

$U_i$ —

# FIG. 3

x : INPUT SIGNAL    e : DIFFERENCE    Q    Ce : ENCODED SIGNAL

DIGITAL VOICE
SOUND INPUT
+ − $S_T$

ADAPTIVE
QUANTIZER

ADAPTIVE
DEQUANTIZER $Q^{-1}$

D

y : PREDICTED
SIGNAL

ADAPTIVE
PREDICTOR +

$Q^{-1}$

DIGITAL VOICE
SOUND OUTPUT

$A_D$  e

+ y

ADAPTIVE
PREDICTOR

ADAPTIVE
DEQUANTIZER

Ce

x : REPRODUCED SIGNAL    D

# FIG. 4

| SOUND QUALITY LEVEL | | TYPE | SAMPLING FREQUENCY (kHz) | QUANTIZING NUMBER (BIT) | BIT REDUCTION RATIO (STEREO/MONO) | AUDIO CHARACTERISTICS | |
|---|---|---|---|---|---|---|---|
| | | | | | | DYNAMIC RANGE (dB) | FREQUENCY RANGE (kHz) |
| CD DIGITAL AUDIO (SOUND QUALITY CORRESPONDING TO PRESENT 16-BIT PCM) | | PCM | 44.1 | 16 | 1 | 98 | 20 |
| A | HIFI (SOUND QUALITY CORRESPONDING TO LP RECORD) | ADPCM | 37.8 | 8 | 1/2 / 1/4 | 90 | 17 |
| B | MID-HIFI (SOUND QUALITY CORRESPONDING TO FM BROADCAST) | ADPCM | 37.8 | 4 | 1/4 / 1/8 | 90 | 17 |
| C | SPEECH (SOUND QUALITY CORRESPONDING TO AM BROADCAST) | ADPCM | 18.9 | 4 | 1/8 / 1/16 | 50 | 8.5 |

## F I G. 5 (A)

403

F_TOC.dat

84

| XA APPLICATION INFORMATION AREA | $X_A$ |
| XA DATA INFORMATION AREA | $X_D$ |

| XA type | $X_{A1}$ |
| YEAR, MONTH, DATE OF PRODUCTION | $X_{A2}$ |
| (C) COPYRIGHT STATEMENT | $X_{A3}$ |
| Target System Name | $X_{A4}$ |

## F I G. 5 (B)

$X_D$

| XA HEADER AREA | $X_{DH}$ |
| XA DATA AREA | $X_{DD}$ |

| LAYER NUMBER | $DH_1$ |
| Reserved | $DH_2$ |
| Reserved | $DH_3$ |
| Reserved | $DH_4$ |
| DATA ADDRESS | $DH_5$ |
| DATA SIZE | $DH_6$ |
| LAYER ID | $DH_7$ |
| Reserved | $DH_8$ |
| LAYER ADDRESS | $DH_9$ |
| LAYER SIZE | $DH_{10}$ |

| LAYER ID | $DH_{11}$ |
| Reserved | $DH_{12}$ |
| LAYER ADDRESS | $DH_{13}$ |
| LAYER SIZE | $DH_{14}$ |

14

# FIG. 5 (C)

$X_{DO}$ : XA DATA AREA

## DA

| | |
|---|---|
| A_FILE # | DA1 |
| A_type | DA2 |
| start address | DA3 |
| End Address | DA4 |
| Duration | DA5 |
| Recrd count | DA6 |
| record # | DA7 |
| Start address | DA8 |
| End address | DA9 |

| | |
|---|---|
| record # | DA10 |
| Start address | DA11 |
| End address | DA12 |

## DG

| | |
|---|---|
| G_FILE # | DG1 |
| G_type | DG2 |
| r ec_ch # | DG3 |
| Start address | DG4 |
| End Address | DG5 |
| Number of colors used | DG6 |
| Number of colors expressed | DG7 |
| Number of pixels in X direction | DG8 |
| Number of pixels in Y direction | DG9 |

| | |
|---|---|
| | DG10 |
| End Address | DG11 |
| Recrd count | DG12 |
| record # | |
| Start cddress | DG13 |
| End address | DG14 |
| Time to start display | DG15 |
| Time to end display | DG16 |

| | |
|---|---|
| | DG17 |
| Recrd count | DG18 |
| record # | |
| Start address | DG19 |
| End address | DG20 |
| Time to start display | DG21 |
| Time to end display | DG22 |

## DT

| | |
|---|---|
| T_FILE # | DT1 |
| T_type | DT2 |
| r ec_ch # | DT3 |
| Start address | DT4 |
| End Address | DT5 |
| Recrd count | DT6 |
| record # | DT7 |
| Start address | DT8 |
| End address | DT9 |
| Time to start display | DT10 |
| Time to end display | DT11 |

| | |
|---|---|
| Recrd count | DT12 |
| record # | DT13 |
| Start address | DT14 |
| End address | DT15 |
| Time to start display | DT16 |
| Time to end display | DT17 |

## DS

| | |
|---|---|
| S_FILE # | DS1 |
| S_type | DS2 |
| Recrd count | DS3 |
| record # | DS4 |
| WORD-OF-SONG Phrase | DS5 |
| Start Address | DS6 |
| End Address | DS7 |

| | |
|---|---|
| record # | DS8 |
| WORD-OF-SONG Phrase | DS9 |
| Start Address | DS10 |
| End Address | DS11 |

EP 0 465 244 A2

# FIG. 6

FIG. 7 (A)

FIG. 7 (B)

FIG. 7 (C)

FILE - TOC READ ~1005

( START ) ~1050

SUPPLY SEARCH/REPRODUCTION COMMAND FROM SYSTEM CONTROL MICROCOMPUTER 71 TO SERVO CONTROL MICROCOMPUTER 72 ~1051

SEND SEARCH/REPRODUCTION COMMAND FROM SERVO CONTROL MICROCOMPUTER 72 TO SERVO CKT 73 ~1052

TRANSFER FILE-TOC DATA FROM DIGITAL SIGNAL PROCESSOR 82 TO CD-ROM DECODER 83 ~1053

TRANSFER DECODED FILE-TOC DATA FROM CD-ROM DECODER 83 TO SYSTEM CONTROL MICROCOMPUTER 71 ~1054

STORE FILE-TOC DATA IN RAM 71R UNDER CONTROL OF SYSTEM CONTROL MICROCOMPUTER 71 ~1055

( END ) ~1056

FIG. 7 (D)

PRINT/DISPLAY WORDS OF SONG ~1006

( START ) ~1060

TRANSFER FILE-TOC DATA FROM RAM 71R TO PRINTER 91, LCD 92 UNDER CONTROL OF SYSTEM CONTROL MICROCOMPUTER 71 ~1061

PRINT/DISPLAY KEY DEPRESSED ? — N ~1062

Y

PRINT/DISPLAY WORDS OF SONG ~1063

( END ) ~1064

18

FIG. 8 (A)

FIG. 8 (B)

FIG. 8 (C)